# EUROPÄISCHE PATENTSCHRIFT

(11) **EP 4 271 499 B1**
(45) Veröffentlichungstag und Bekanntmachung des Hinweises auf die Patenterteilung: **22.04.2026**
(21) Anmeldenummer: 22710351.2
(22) Anmeldetag: 25.02.2022
(51) Int. Cl.: B01D 29/11, B01D 29/21

(54) **VERFAHREN ZUR BILDUNG EINES FILTERMEDIUMS**
PROCESS OF FORMING A FILTERING MEDIUM
PROCÉDÉ DE FORMATION D'UN MEDIA DE FILTRATION

(30) Priorität: 05.03.2021 DE 102021001192
(43) Veröffentlichungstag der Anmeldung: 08.11.2023
(73) Patentinhaber: Hydac Filtertechnik GmbH, 66280 Sulzbach/Saar (DE)
(72) Erfinder: SAKRASCHINSKY, Michael, 66386 St. Ingbert (DE); MEES, Harald, 66822 Lebach (DE)
(74) Vertreter: Bartels und Partner, Patentanwälte
(86) Internationale Anmeldenummer: PCT/EP2022/054786
(87) Internationale Veröffentlichungsnummer: WO 2022/184574

(56) Entgegenhaltungen:
- DE-A1- 2 138 412
- FR-A1- 2 175 901
- GB-A- 867 004
- GB-A- 880 812
- US-A- 3 662 895

## Beschreibung

Die Erfindung betrifft ein Verfahren zur Bildung eines zur Filtration von Fluiden geeigneten Filtermediums für ein Filterelement mit den Verfahrensschritten im Oberbegriff von Anspruch 1.

Durch DE 199 10 821 C2 ist ein Verfahren zum Herstellen eines Filterelementes bekannt, das insbesondere zum Einbau in ein Tankgehäuse einer Hydraulikanlage vorgesehen ist und eine rohrförmige Filtermatte als Medienbahn aufweist, die einen inneren Hohlraum für ungefilterte Flüssigkeit umschließt, der an einem bodenseitigen Ende durch eine untere Endkappe abgeschlossen ist, die mit dem angrenzenden Rand eines die Filtermatte umgebenden, äußeren Stützrohres verbunden ist, das bereichsweise mit Durchbrüchen versehen und am kopfseitigen oberen Ende mit einer oberen Endkappe verbunden ist, die eine Durchflussöffnung für zu filternde Flüssigkeit aufweist, wobei das Verfahren die Schritte beinhaltet:
a) Umbördeln des bodenseitigen Randes des Stützrohres nach innen,
b) Einlegen der unteren Endkappe mit einer einen zentralen, erhöhten Bodenteil umgebenden, randseitigen vertieften Ringfläche in den umbördelten bodenseitigen Rand des Stützrohres,
c) Einfüllen eines Klebstoffes in den durch die randseitige Ringfläche der unteren Endkappe definierten Klebebadbereich,
d) Einschieben der Filtermatte in das Stützrohr zur Bildung einer Klebung an der unteren Endkappe,
e) Vorsehen einer solchen oberen Endkappe, deren zentrale Durchflussöffnung von einer vertieften randseitigen Ringfläche umgeben ist, die einen oberen Klebebadbereich definiert und sich am Stützrohr radial über dessen kopfseitigen Rand hinaus nach außen erstreckt, an dem eine flanschartige, radiale Erweiterung ausgebildet wird, die eine Haltefläche zur Abstützung des Filterelementes am Rand einer Öffnung des Tankgehäuses bildet,
f) Befüllen des Klebebadbereiches der oberen Endkappe mit Klebstoff und
g) Einsetzen des kopfseitigen Endes der vom Stützrohr umgebenen Filtermatte in den Klebebadbereich der oberen Endkappe zur Bildung einer kopfseitigen Klebung.

Bei der bekannten Lösung ist keine Vorfertigung einer inneren Filtereinheit erforderlich, so dass das innere Stützrohr in Wegfall geraten kann. Jedoch benötigt das bekannte Verfahren das Herstellen von Klebstoffverbindungen zwischen den Endkappen und dem dazwischenliegenden Filtermedium in Form der plissierten Medienbahn, was herstelltechnisch gesehen einen erhöhten Aufwand mit sich bringt.

Durch WO 2011/060949 A2 ist ein Verfahren zur Bildung einer zur Filtration von Fluiden geeigneten Filtermatte aus mindestens einem Bahnabschnitt einer Mattenbahn bekannt, wobei mindestens eine die Lagen mindestens eines Bahnabschnittes der Mattenbahn miteinander versiegelnde Schweißbahn gebildet wird und wobei anschließend mindestens ein Schnitt entlang der mindestens einen Schweißbahn derart durchgeführt wird, dass der mindestens eine Bahnabschnitt unter Bildung mindestens eines versiegelten Randbereichs durchschnitten wird. Bei dieser bekannten Lösung verbleibt der Teil der Schweißbahn an den bzw. den Seitenrändern der Mattenbahn und bildet somit eine Randversiegelung aus, durch die die Enden sämtlicher Lagen durch den das Kunststoffmaterial der Lagen aufschmelzenden Schweißvorgang versiegelt sind. Dergestalt ist eine ungewollte Auffädelung oder eine Fasermigration an den Rändern der fluiddurchlässigen Medienbahn verhindert.

Die GB 880 812 A beschreibt Verfahren zur Bildung eines zur Filtration von Fluiden geeigneten Filtermediums für ein Filterelement mit zumindest den folgenden Verfahrensschritten:
- Aufbringen mindestens eines eigenständigen Dichtmittels in einer vorgebbaren Richtung auf eine fluiddurchlässige Medienbahn,
- Herstellen eines festen Verbundes zumindest zwischen Teilen des Dichtmittels und der Medienbahn,
- Plissieren des Verbundes unter Bildung einzelner Filterfalten quer zu der vorgebbaren Richtung,
- Erzeugen eines Hohlkörpers, indem die beiden einander benachbart gegenüberliegenden, quer zur vorgebbaren Richtung verlaufenden Seitenränder der Medienbahn miteinander verbunden werden, so dass für das
- Erhalten mindestens eines Abdichtbereiches an der Medienbahn, das jeweilige Dichtmittel auf der Innenseite des Hohlkörpers angeordnet eine Abdichtung für die jeweilige Filterfalte und eine stirnseitige Abdichtung der Medienbahn erreicht wird.

Weitere Verfahren zur Bildung von Filtermedien gehen aus der DE 21 38 412 A1, der FR 2 175 901 A1 und der US 3 662 895 A hervor.

Ausgehend von diesem Stand der Technik liegt der Erfindung die Aufgabe zugrunde, ein Verfahren zum Herstellen eines Filtermediums für ein Filterelement zu schaffen, das sich in einfacher und kostengünstiger Weise durchführen lässt. Der Erfindung liegt ferner die Aufgabe zugrunde, ein Filterelement sowie eine Filtervorrichtung zur Verfügung zu stellen, die diese Aufgabenstellung gleichfalls erfüllen.

Eine dahingehende Aufgabe löst ein Verfahren mit den Verfahrensschritten des Patentanspruches 1, ein Filterelement mit den Merkmalen des Patentanspruches 8 sowie eine Filtervorrichtung mit den Merkmalen des Patentanspruches 17.

Gemäß dem Kennzeichen von Anspruch 1 ist vorgesehen, dass das Dichtmittel aus einem Materialstreifen zwecks Erhalt eines Dichtstreifens gebildet wird, das zumindest teilweise aus einem verschweißbaren Kunststoffmaterial besteht und das nach Aufbringen auf die Medienbahn zum Herstellen des festen Verbundes mittels eines Schweißverfahrens aufgeschweißt wird.

Das Verfahren zur Bildung eines Filtermediums ist mit zumindest den folgenden Verfahrensschritten durchzuführen:
- Aufbringen mindestens eines eigenständigen Dichtmittels in einer vorgebbaren Richtung auf eine fluiddurchlässige Medienbahn,
- Herstellen eines festen Verbundes zumindest zwischen Teilen des Dichtmittels und der Medienbahn,
- Plissieren des Verbundes unter Bildung einzelner Filterfalten quer zu der vorgebbaren Richtung,
- Erzeugen eines Hohlkörpers, indem die beiden einander benachbart gegenüberliegenden, quer zur vorgebbaren Richtung verlaufenden Seitenränder der Medienbahn miteinander verbunden werden, so dass für das
- Erhalten mindestens eines Abdichtbereiches an der Medienbahn, das jeweilige Dichtmittel auf der Innenseite des Hohlkörpers angeordnet eine Abdichtung für die jeweilige Filterfalte und eine stirnseitige Abdichtung der Medienbahn erreicht wird.

Dergestalt lässt sich in kostengünstiger und herstelltechnisch einfacher Weise ein Filterelement erhalten, mit dem eine sichere Abdichtung einer Unfiltratseite von einer Filtratseite des Filterelementes erreicht ist. Das erfindungsgemäße Verfahren erlaubt das Erstellen eines Filterelementes ohne die üblichen Endkappen und ohne den Einsatz von Klebstoffverbindungen, um die Endkappen mit der fluiddurchlässigen Medienbahn unter Bildung eines Filterelementes als Ganzes zu verbinden.

Ein vorzugsweise nach diesem Verfahren hergestelltes Filterelement weist dabei in bekannter Weise ein fluiddurchlässiges Stützrohr auf, das von einer plissierten Medienbahn des Filtermediums umfasst ist, wobei das Filterelement dadurch charakterisiert ist, dass die Medienbahn an mindestens einem ihrer Endbereiche ein streifenförmiges Dichtmittel aufweist, das in die Medienbahn mit eingefaltet ist und das als eigenständiges Bauteil zumindest teilweise mit der Medienbahn fest verbunden ist. Durch das Einfalten eines streifenförmigen Dichtmittels in die Medienbahn kann auf Klebstoffverbindungen als bekanntes Dichtmittel verzichtet werden.

Eine Filtervorrichtung dient der Aufnahme eines solchen Filterelementes, wobei die Vorrichtung mit einem Filterkopf versehen ist, der einen Zulauf für Unfiltrat und einen Ablauf für Filtrat aufweist, wobei an dem über eine Verrohrung stationär festgelegten Filterkopf ein zugehöriger Filtertopf mit dem Filterelement sich abnehmen, insbesondere abschrauben, lässt. Dadurch, dass erfindungsgemäß das Filterelement mittels eines Festlegestutzens seines Stützrohres lösbar oder fest mit dem Ablauf im Filterkopf verbunden ist, lässt sich das Filterelement in einfach tauschbarer Weise zusammen mit seinem Stützrohr aus der Vorrichtung entnehmen oder es wird bei verbleibendem Stützrohr am Filterkopf nur das zu tauschende Filtermedium mit seinen jeweiligen klebstofffrei angebrachten Dichtmitteln entfernt. Insbesondere die letztgenannte Lösung lässt sich auf besonders umweltfreundliche Weise umsetzen.

Weitere vorteilhafte Ausgestaltungen des erfindungsgemäßen Verfahrens, des Filterelementes sowie der zugehörigen Filtervorrichtung sind Gegenstand der Unteransprüche.

Im Folgenden wird die erfindungsgemäße Lösung anhand von verschiedenen Ausführungsbeispielen nach der Zeichnung näher erläutert. Dabei zeigen in prinzipieller und nicht maßstäblicher Darstellung die
- Fig. 1 bis 3: in der Art eines Ablaufplanes die wesentlichen Herstellschritte;
- Fig. 4 und 5: einmal in Draufsicht, einmal in Ansicht längs der Schnittlinie X-X in Fig. 4 einen Teilausschnitt der plissierten Filtermattenbahn mit eingefaltetem Dichtmittel;
- Fig. 6 und 7 sowie 11 bis 15: in der Art einer Längsschnittdarstellung verschiedene Ausführungsbeispiele von Filterelementen;
- Fig. 8, 9, 16 und 17: verschiedene Ausgestaltungen von Filtervorrichtungen; und
- Fig. 10: in der Art einer Längsschnittdarstellung ein Ausführungsbeispiel eines Filtermediums als Hohlkörper.

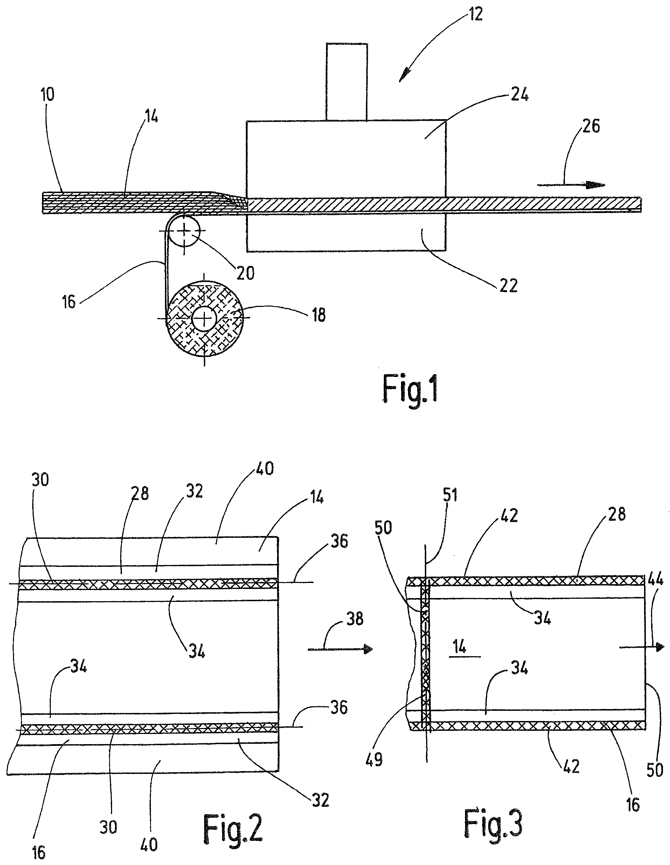

In Blickrichtung auf die Fig. 1 gesehen, werden linksseitig einzelne übereinander angeordnete Medienlagen 10 einer als Ganzes mit 12 bezeichneten Schweißeinrichtung zugeführt. Der mehrlagige Aufbau einer solchen Filtermatte oder Medienbahn 14 für ein Filterelement 15 eines Filterelementes 17 kann beispielsweise von der einen Seite zu der anderen Seite hin folgenden Schichtaufbau aufweisen:
1. Metalldrahtgewebe oder Kunststoffgewebe oder Kunststoffgitter mit Netzstruktur,
2. Polyestervlies,
3. Glasfasermatte oder Melt-Blown-Vlies,
4. Glasfasermatte oder Melt-Blown-Vlies, Papiervlies oder Polyestervlies,
5. Edelstahlpolyester-Mischgewebe oder ein Kunststoff-Mischgewebe, und
6. Metalldrahtgewebe oder Kunststoffgewebe oder Kunststoffgitter mit Netzstruktur.

Andere Lagenzusammensetzungen sind hier ohne weiteres möglich und der Lagenaufbau bestimmt sich danach, welche Anforderungen später an ein fertiges Filterelement zur Abreinigung partikulärer Verschmutzungen gestellt werden.

Wie sich aus der Fig. 1 weiter ergibt, wird von der Unterseite der Medienbahn 14 her und vor der Schweißeinrichtung 12 ein streifenförmiges Dichtmittel 16 zugeführt, das von einer Abwickelrolle 18 stammend über eine Umlenkrolle 20 parallel zur Medienbahn 14 verlaufend dieser zugeführt wird. Die Schweißeinrichtung 12 ist als Ultraschallschweißeinrichtung ausgebildet mit einem Amboss 22 und einer auf- und abbewegbaren Sonotrode 24. Es sind Ausführungsformen denkbar, bei denen die Sonotrode 24 stationär angeordnet ist und der Amboss 22 sich in Blickrichtung auf die Fig. 1 gesehen vertikal auf- und abbewegt. Die vorgebbare Richtung zum Aufbringen des eigenständigen Dichtmittels 16 auf die fluiddurchlässige Medienbahn 14 ist mit einem Pfeil 26 wiedergegeben.

Vor oder hinter der Zeichenebene gemäß der Darstellung nach der Fig. 1 ist die dort gezeigte Zufuhreinrichtung für ein weiteres Dichtmittel 28 ebenso zweifach vorhanden wie die Schweißeinrichtung 12. Demgemäß entsteht als Fertigungszwischenschritt eine Medienbahnausgestaltung, wie sie in der Fig. 2 von oben wiedergegeben ist, die eine Unteransicht auf die Fig. 1 darstellt und randseitig zwei streifenförmige Dichtmittel 16 und 28 aufweist. Der jeweilige Dichtstreifen in Form des Dichtmittels 16, 28 hat eine Breite von ca. 30 mm und die Sonotrode 24 bringt mittig jeweils eine Schweißnaht oder Schweißbahn 30 von ca. 10 mm Breite auf. Insoweit verläuft die jeweilige Schweißbahn 30 in etwa mittig auf dem jeweiligen streifenförmigen Dichtmittel 16,28 gemäß der ausschnittsweisen Darstellung nach der Fig. 2.

Des Weiteren liegt ausgehend von der jeweiligen in Längsrichtung 26 aufgebrachten Schweißbahn 30 das jeweilige Dichtmittel 16, 28 mit einem äußeren Längsstreifen 32 sowie einem demgegenüber inneren Längsstreifen 34 lose auf der Oberseite der Medienbahn 14 auf, die mit ihren einzelnen Medienlagen 10 im Bereich des Schweißbahnverlaufs 30 gleichfalls fest untereinander verbunden sind. Anschließend wird die jeweilige Schweißbahn 30, wie bereits in der WO 2011/060949 A2 beschrieben, entlang von Trennlinien 36 parallel zu einer Transportrichtung 38 in Fortführung der Richtung 26 in Längsrichtung durchgeschnitten, so dass eine Medienbahn 14 verbleibt, gemäß der Darstellung nach der Fig. 3. Die beiden abgeschnittenen Randstreifen 40 bilden die sogenannten Abfallstreifen; es besteht aber auch die Möglichkeit, mehrere Bahnabschnitte nebeneinander anzuordnen, so dass sich dann eine Vielzahl fertig erstellter Medienbahnen 14 gemäß der Darstellung nach der Fig. 3 ergeben. So lassen sich beispielsweise ohne Weiteres auch drei bis fünf solcher Medienbahnen 14 nebeneinander, quer zur Transportrichtung 38 gesehen, in einem dann zu trennenden Verbund entlang der Trennlinien 36 anordnen. Das Durchtrennen der Medienbahn 14 entlang der jeweiligen Trennlinie 36 erfolgt vorzugsweise mittig der Schweißbahn 30, um sicherzustellen, dass die verbleibende bahnartige Schweißnaht 42 nach der Fig. 3 die einzelnen Medienlagen 10 fest im Verbund aneinanderhält und der innere Längsstreifen 34 des jeweiligen streifenförmigen Dichtmittels 16, 28 verbleibt weiter lose liegend auf der zuoberst angeordneten Medienlage 10 des Lagenverbundes in Form der Medienbahn 14.

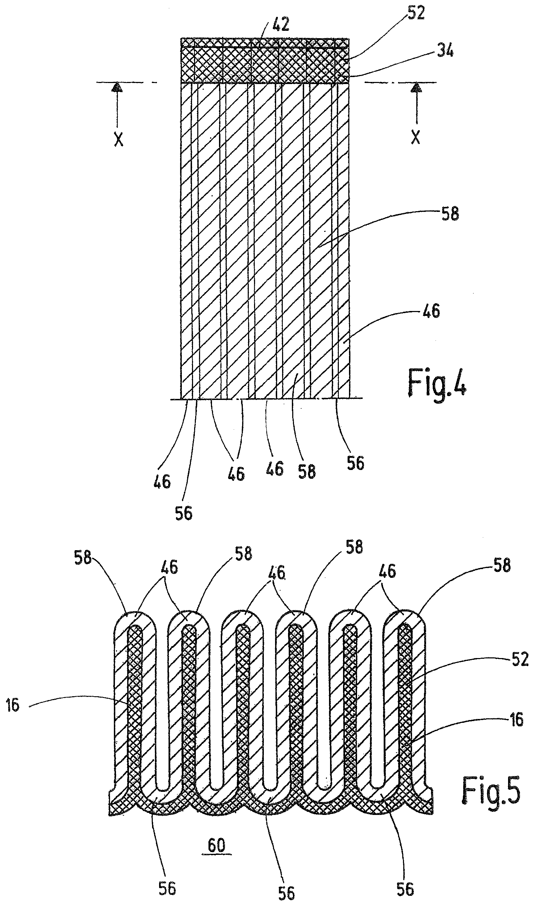

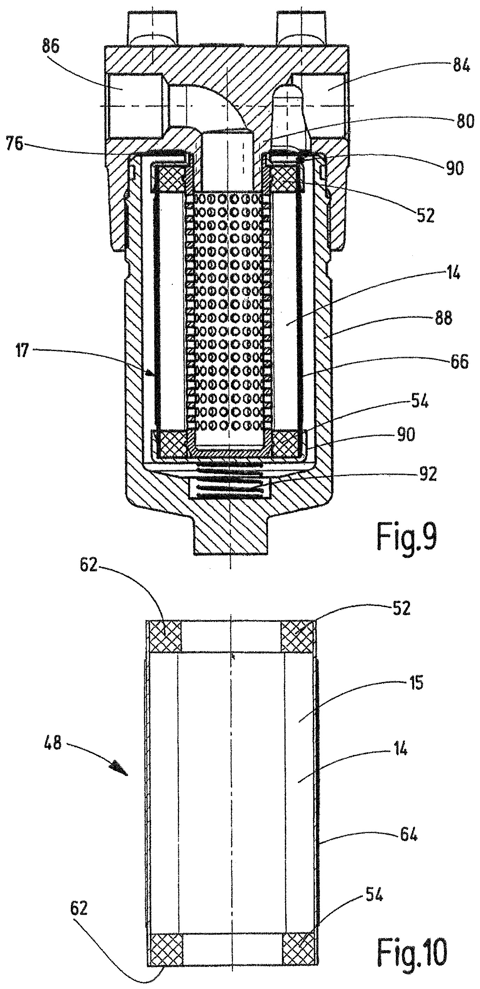

In einer weiteren mit 44 bezeichneten Transportrichtung folgt eine Plissieranlage, wie dies beispielhaft in der WO 2011/060949 A2 dargestellt ist und dabei entstehen als weiterem Fertigungsschritt einzelne Filterfalten 46 gemäß der Darstellung nach der Fig. 5. Wie des Weiteren in der WO 2011/060949 A2 dargestellt ist, kann vorzugsweise vor dem Plissieren aber auch durchaus nach dem Plissiervorgang und quer zur Schweißbahn 30, 42 verlaufend eine Querschweißnaht 49 eingebracht sein, die gleichfalls entlang einer quer verlaufenden Trennlinie 51 durchtrennt wird, um dergestalt Medienbahnen 14 vorgebbarer Länge zu erzeugen, um so einen zylindrischen Hohlkörper 48 zu erhalten, wie er beispielhaft in der Fig. 10 dargestellt ist. Hierfür wird die Medienbahn 14 zum zylindrischen Hohlkörper 48 aufgestellt und an den beiden einander gegenüberliegenden Seitenrändern 50 miteinander durch Schweißen fest verbunden. Das Durchschneiden der jeweiligen bahnartigen Schweißnaht 30, 49 längs und quer zur jeweiligen Medienbahn 14 gesehen, hat jedenfalls den Vorteil, dass das Fasermaterial der Medienlagen 10 mit eingeschweißt wird und es somit nicht ungewollt zu einem Auffädeln mit Faseraustrag kommt, der ansonsten als Partikelverunreinigung in den Fluidstrom auch auf die Filtratseite des Filterelementes 17 gelangen könnte.

Als streifenförmiges aufzuschweißendes Dichtmittel 16, 28 werden thermoplastische Filtermedien eingesetzt, wie ein Non-Woven oder ein Spinnvlies.

Für das Non-Woven können schmelzgeblasene Kunststofffasern zum Einsatz kommen, die fachsprachlich auch mit Melt-Blown-Fasern bezeichnet sind. Als besonders geeignet haben sich Non-Woven mit 90 % PolyethylenAnteil und 10 % Polypropylen-Anteil erwiesen. Als geeignete Spinnvliese kommen solche in Frage, die wasserstrahl- oder nadelverfestigt sind und besonders bevorzugt wird eine Dicke für die Vliese zwischen 0,6 bis 1,3 mm gewählt.

Wie sich insbesondere aus der Fig. 4 ergibt, ist zumindest an einer Endseite der Medienbahn 14 ein Abdichtbereich 52 an der Medienbahn 14 erhalten. In der Fig. 4 ist nur ein Abdichtbereich 52 dargestellt. Gemäß der Darstellung nach der Fig. 10 befindet sich aber bevorzugt ein weiterer Abdichtbereich 54 auch auf der gegenüberliegenden Seite der Matten- oder Medienbahn 14, der gleich zum Abdichtbereich 52 ausgestaltet ist.

Wie sich aus der Fig. 5 des Weiteren ergibt, erstrecken sich die einzelnen Filterfalten 46 mit gleicher Faltenhöhe zwischen einem Faltental 56 und einem Faltenberg 58. Jede einzelne Filterfalte 46 bildet einen Abstand zwischen einer aufsteigenden und einer absteigenden Faltenseite aus, wobei der Abstand vollflächig von dem eingefalteten Dichtmittel 16, 28 ausgefüllt ist. Das dahingehend streifenförmige Dichtmittel 16, 28 ist darüber hinaus entlang des bogenförmigen Faltentalverlaufes auf der Innenseite 60 der diesbezüglichen Faltentäler 56 geführt. Wie bereits dargelegt, ist im Hinblick auf den Aufschweißvorgang das jeweilige Dichtmittel 16, 28 entlang der Schweißnaht 42 fest mit dem Faltenverlauf der Filterfalten 46 verbunden. Wie sich des Weiteren aus der Fig. 4 ergibt, weist der jeweilige Abdichtbereich 52, 54 nach außen hin diese Schweißnaht 42 auf entlang der die Medienbahnen 10 sowie das jeweilige Dichtmittel 16, 28 fest mit dem Filtermedium 15 verschweißt ist, wohingegen der jeweils innere Längsrand oder Längsstreifen 34 lose auf einer Oberseite der Medienbahn 14 gemäß der Darstellung nach der Fig. 5 in eingefalteter Weise aufliegt.

Das jeweilige Dichtmittel 16, 28 ist gemäß der Darstellung nach der Fig. 10 entlang der beiden einander gegenüberliegenden Stirnseiten 62 in den zugehörigen Endbereichen, die die Abdichtbereiche 52, 54 des Filtermediums 15 bilden in der hohlkörperartigen Medienbahn 14 angeordnet.

Das insoweit hergestellte hohlzylindrische Filtermedium 15 ist in der Fig. 10 dargestellt, das stirnseitig die beiden Abdichtbereiche 52 und 54 aufweist. Die Medienbahn 14 des Filtermediums 15 ist außenumfangsseitig von einem folienartigen, fluiddurchlässigen Umfassungsmantel 64 umfasst. Ein solcher Umfassungsmantel ist beispielhaft in der DE 10 2010 011 722 A1 offenbart, wobei die die Außenhülse als Umfassungsmantel 64 bildende Folie aus einer Polyamid- oder Polyethylenverbindung bestehen kann. Weitere Folienmaterialien sind Polyester oder Epoxyd-Polyurethan. Insgesamt kann der Umfassungsmantel 64 aus einem ähnlichen Kunststoff wie vorstehend erwähnt mit guten Heißklebeeigenschaften gebildet sein und die bahnartige Folie lässt sich unter Bilden des hohlzylindrischen Umfassungsmantels 64 entlang ihrer einander gegenüberliegenden Seitenränder durch ein Ultraschallschweißverfahren oder mittels eines Schweißlasers verbinden. Die Folie ist für einen Fluiddurchlass entsprechend perforiert und der hohlzylindrische Umfassungsmantel 64 kann als eigenständiges Bauteil von außen her auf die hohlkörperartige Medienbahn 14 aufgeschoben werden. Da die Filterfalten 46 entsprechend nachgiebig sind, ist ein dahingehender Aufschiebvorgang ohne weiteres möglich und die Filterfalten 46 werden in ihrer Position durch den Umfassungsmantel 64 gehalten.

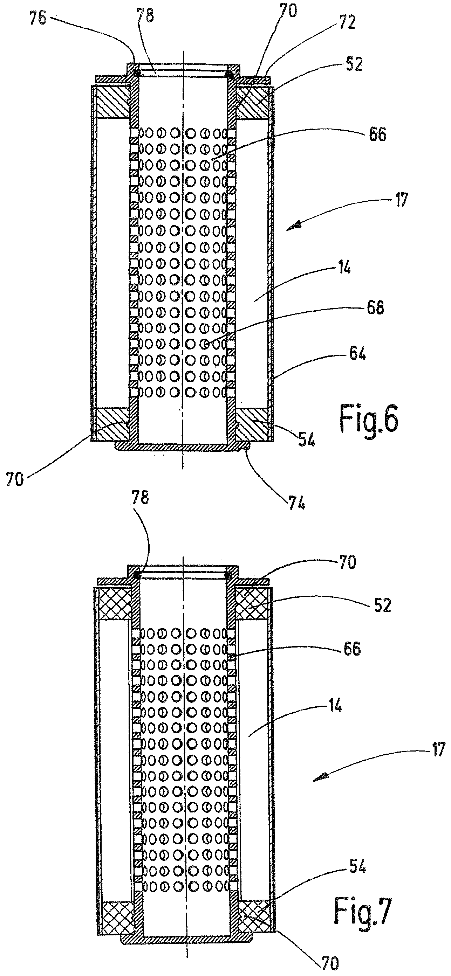

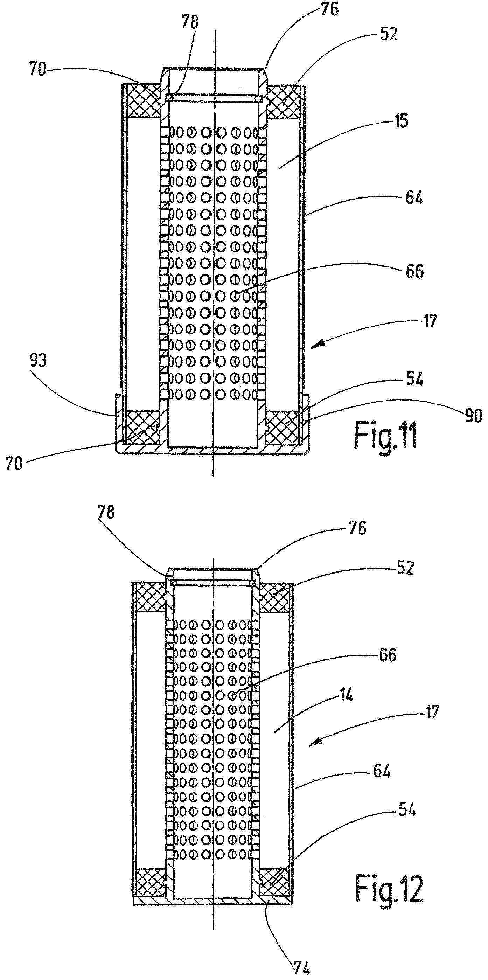

Eine andere Herstellmöglichkeit besteht darin, den folienartigen Umfassungsmantel 64 um die Medienbahn 14 herumzulegen und dann die sich überlappenden Seitenrandbereiche der Folie miteinander zu verschweißen zwecks Erhalt des insoweit geschlossenen Umfassungsmantels 64. Wie die Fig. 9, 10, 13 und 15 zeigen, kann der Umfassungsmantel 64 die beiden Bereiche 52, 54 frei lassen; es besteht aber auch die Möglichkeit, nach den Fig. 6 bis 8 sowie 12, 14, 16 und 17 den Umfassungsmantel 64 in axialer Richtung gesehen, derart zu verlängern, dass die Abdichtbereiche 52, 54 außenumfangsseitig noch mit umgriffen sind, so dass sich insoweit das eingefaltete Dichtmittel 16, 28 außenumfangsseitig an den dahingehenden Teilen des Umfassungsmantels 64 mit abstützen kann. Bei einer Ausführungsform gemäß der Darstellung nach der Fig. 11 umfasst der Umfassungsmantel 64 in Blickrichtung auf die Fig. 11 gesehen nur den oberen Abdichtbereich 52 unter Freilassen des unteren Abdichtbereiches 54.

Bei allen vorstehend beschriebenen Herstellarten ist insoweit das Filtermedium 15 klebstoffrei hergestellt, was eine besonders kostengünstige Realisierung ermöglicht, insbesondere wenn keine zusätzlichen Endkappen benötigt werden und durch Vermeiden von Klebstoffverbindungen ist das Filtermedium 15, insbesondere was das Entsorgen anbelangt, umweltfreundlich realisiert. Das Filtermedium 15 lässt sich nun, wie dies beispielhaft in der Fig. 6 wiedergegeben ist zum Komplett-Filterelement 17 weiter ausbauen. Insoweit weist das Filterelement 17 innenumfangsseitig ein hohlzylindrisches Stützrohr 66 auf, das im Bereich der Medienbahn 14 mit einer Vielzahl von Fluiddurchlässen in der Art einer Perforation 68 versehen ist. Die plissierte Medienbahn 14 liegt dabei mit ihren einzelnen Faltentälern 56 an der Außenumfangsseite des hohlzylindrischen Stützrohres 66 an.

Im Bereich der beiden Dichtbereiche 52, 54 ist das Stützrohr 66 mit einer geschlossen ausgebildeten Umfassungswand versehen entlang der in mittiger Anordnung ein ringförmiger Dichtwulst 70 vorspringt, der jeweils einstückiger Bestandteil des Stützrohres 66 ist und der mit einer vorgebbaren Vorspannung in den jeweiligen Abdichtbereich 52, 54 eingreift, um die Dichtkraftwirkung für den jeweiligen Abdichtbereich 52, 54 zu erhöhen. Der jeweilige Dichtwulst 70 ist im Querschnitt gesehen schalenförmig, insbesondere halbkugelförmig, ausgebildet mit einem Radius zwischen 0,3 mm bis 1,0 mm, vorzugsweise mit einem Radius zwischen 0,5 mm und 0,9 mm, besonders bevorzugt mit einem Radius von 0,8 mm. Der Dichtwulst 17 komprimiert die Faltenrücken und mithin die Faltentäler 56 derart, dass an der Filtermatte respektive der Medienbahn 14 ein umlaufend ebener Bereich entsteht, der vollflächig am Dichtwulst 70 anliegt und die Medienbahn 14 gegenüber dem Stützrohr 66 mit seiner geschlossen ausgebildeten Umfangswand in diesem Bereich abdichtet. Gute Abdichtergebnisse haben sich auch ergeben, wenn, wie dies beispielhaft in der Fig. 7 dargestellt ist, der Dichtwulst im Querschnitt gesehen einen dreieckförmigen Verlauf hat. Insoweit unterscheidet sich die Ausführungsform nach der Fig. 7 von der ansonsten gleich ausgebildeten Ausführungsform eines Filterelementes 17 nach der Fig. 6.

Wie sich des Weiteren aus den Fig. 6 und 7 ergibt, weist das Stützrohr 66 an seinen beiden einander gegenüberliegenden Enden eine ringartige Verbreiterung 72, 74 auf, die zumindest teilweise das jeweils benachbart angeordnete Dichtmittel 16 bzw. 28 übergreift. Dabei weist in Blickrichtung auf die Fig. 6 und 7 gesehen die obere, ringartige Verbreiterung 72 einen größeren Durchmesser auf als die untere Verbreiterung 74. Des Weiteren sitzt der weitere untere Abdichtbereich 54 auf der ringartigen Verbreiterung 74 auf, wohingegen ein axialer Spaltabstand zwischen der Oberseite des Abdichtbereiches 52 und der Unterseite der ringartigen Verbreiterung 72 besteht, der zum einen verdeutlicht, dass die jeweilige Verbreiterung 72, 74 nicht zur Abdichtung des Filtermediums 15 benötigt wird und der eine gewisse Längenanpassung zwischen der Geometrie des Stützrohres 66 und dem hohlkörperartigen Filtermedium 15 als Toleranzausgleich erlaubt. Da bei der Ausführungsform nach den Fig. 6 und 7 das Stützrohr 66 als einstückiger, geschlossener Körper ausgebildet ist, ist die Medienbahn 14 um den Außenumfang des Stützrohres 66 herumzulegen mit anschließendem Verbinden der beiden einander zugewandten Seitenränder 50, beispielsweise mittels eines Ultraschallschweißverfahrens. Anschließend kann der Umfassungsmantel 64 wie bereits ausgeführt von außen auf die plissierte Medienbahn 14 aufgeschoben werden oder er wird als Bahnabschnitt gleichfalls um die hohlzylindrische Medienbahn 14 herumgelegt und entlang den freien Seiten- oder Längsrändern zum Hohlrohr verschweißt.

Des Weiteren weist das Stützrohr 66 an seinem oberen freien Ende einen über die obere Verbreiterung 72 vorspringenden rohrförmigen Festlegestutzen 76 auf, der innenumfangsseitig eine ringförmige Aufnahmenut ausbildet, für die Aufnahme eines Festlegeringes 78 in der Art eines O-Dichtringes aus Elastomermaterial.

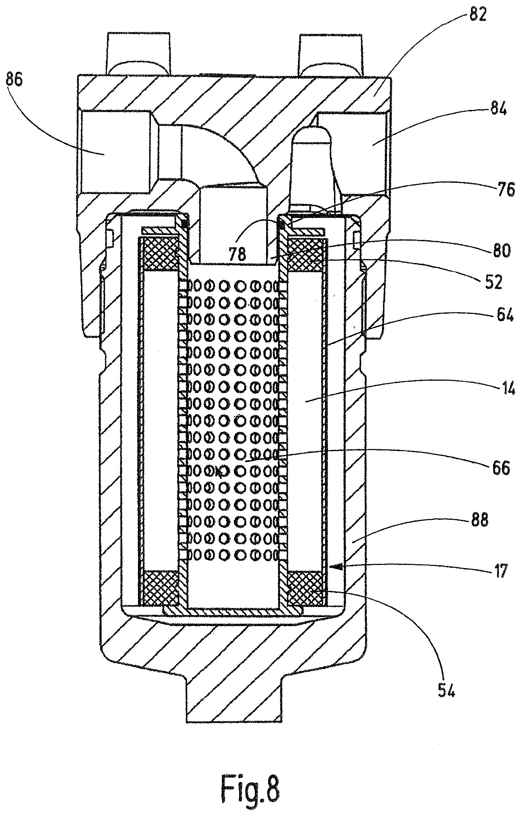

Wie insbesondere die Fig. 8 zeigt, lässt sich das Filterelement 17 nach der Fig. 6 mit seinem Festlegestutzen 76 mittels des Festlegeringes 78 auf einen korrespondierenden Anschlussstutzen 80 aufschieben, der Bestandteil eines Filterkopfes 82 ist, der über eine nicht näher dargestellte Verrohrung an dieser stationär angeordnet ist. Insoweit weist der Filterkopf 82 einen Zulauf 84 für Unfiltrat und einen Ablauf 86 für Filtrat auf. Das Filterelement 17 ist also auf den Anschlussstutzen 80 des Filterkopfes 82 als Filtratablauf aufgeschoben und mittels des Festlegeringes 78 ist eine Abdichtung zwischen der Unfiltratseite und der Filtratseite der Filtervorrichtung hergestellt. Auf den Filterkopf 82 ist von unten her ein Filtertopf 88 eingeschraubt, in dem das austauschbare Filterelement 17 als Ganzes aufgenommen ist. Filterelement 17 und Filtertopf 88 lassen sich in Hintereinanderabfolge am Filterkopf 82 festlegen; bei entsprechender Auslegung besteht aber auch die Möglichkeit, den Filtertopf 88 zusammen mit dem Filterelement 17 am Filterkopf 82 anzubringen. Der vom Zulauf 84 stammende Unfiltratstrom durchströmt im Vorrichtungsgehäuse das Filterelement 17 von außen nach innen und etwaige Partikelverschmutzung verbleibt im Filterwerkstoff der Medienbahn 14.

Bei der Vorrichtungslösung nach der Fig. 9 ist die Lösung gegenüber der Fig. 8 insoweit geändert als nunmehr der Festlegestutzen 76 ohne weiteren elastomeren Festlegering 78 am Anschlussstutzen 80 des Filterkopfes 82 von außen aufgepresst und damit mit dem Anschlussstutzen 80 fest verbunden ist. Des Weiteren verfügt das Filterelement 17 über zwei Endkappen 90, die zwischen sich die plissierte Medienbahn 14 mit den beiden Abdichtbereichen 52, 54 aufnehmen. Die obere Endkappe 90 ist auf das freie Ende des Festlegestutzens 76 und mithin auf das Stützrohr 66 mit aufgepresst und die untere Endkappe 90 stützt sich an einer Druckfeder 92 ab, die sich in der gezeigten Betriebsstellung nach der Fig. 9 mit ihrem unteren Ende wiederum an einem Gehäuseboden des Filtertopfes 88 abstützt. Mittels der Druckfeder 92 wird die Filtermatte oder Medienbahn 14 durch die beiden Endkappen 90 gespannt und insoweit werden die Medienbahnenden mit den beiden Dichtstoff- oder Abdichtbereichen 52, 54 von den Kappen 90 komprimiert und gegen den jeweiligen ringförmigen Dichtwulst 70 am Stützrohr 66 gedrückt. Durch die Lösung nach der Fig. 9 ist eine sogenannte Coreless-Variante realisiert, bei der die Außenhülse in Form des Umfassungsmantels 64 axial vor den Abdichtbereichen 52, 54 am Ende der Filtermatte oder Medienbahn 14 endet. Obwohl insoweit bei der Lösung nach Fig. 9 also kein Festlegering 78 zum Einsatz kommt, ist über die gezeigte Konstruktion eine sichere Abdichtung zwischen Unfiltrat- und Filtratbereich innerhalb der Filtervorrichtung hergestellt.

Da bei der Lösung nach der Fig. 9 das Stützrohr 66 mit der oberen Endkappe 90 fester Bestandteil des Filterkopfes 82 ist, wird für einen Austauschvorgang das Element in Form des Filtermediums 15 über das Stützrohr 66 von unten her aufgeschoben, bis das obere Ende in Form des Abdichtbereiches 52 an der Unterseite der oberen Endkappe 90 des Stützrohres 66 anliegt und von dieser Endkappe 90 radial vorgespannt wird. Dann wird die untere Endkappe 90 auf das Filtermedium 15 mit dem unteren Abdichtbereich 54 so lange aufgeschoben, bis die untere Endkappe 90 am bodenseitig geschlossenen Stützrohr 66 zur Anlage kommt. Hierbei wird das untere Ende des Elementes in Form des Abdichtbereiches 54 von der unteren Endkappe 90 radial vorgespannt. Abschließend wird der Filtertopf 88 als Filtergehäuseteil mit der Druckfeder 92 in den Filterkopf 82 eingeschraubt und die Druckfeder 92 verhindert dabei ein ungewolltes Herunterrutschen der unteren Endkappe 90 und Lösen des beschriebenen Elementverbundes.

Bei der Ausführungsform nach der Fig. 11 wird ein einteiliges Stützrohr 66 eingesetzt und insoweit ist die untere Endkappe 90 nunmehr Bestandteil des dahingehenden Stützrohres 66. Das Filtermedium 15 mit den beiden Abdichtbereichen 52, 54 wird in Blickrichtung auf die Fig. 11 gesehen, oben mittels der Hülse in Form des Umfassungsmantels 64 gespannt und unten mit der Kappe 90 als einteiligem Bestandteil des Stützrohres 66. Dabei umfasst die untere Endkappe 90 mit ihrem zylindrischen Umfassungsrand 93 mit randseitigem Überstand nach oben hin den unteren Abdichtbereich 54 der Medienbahn 14. Daran angrenzend beginnt der Umfassungsmantel 64, der unter Umfassen des oberen Abdichtbereiches 52 in einer gemeinsam verlaufenden Horizontalebene endet, über die der ringartige Festlegestutzen 76 vorsteht. Insoweit ist mit der Lösung nach der Fig. 11 ein klebstofffreies, funktionsfähiges Filterelement 17 geschaffen.

Bei der Ausführungsform nach der Fig. 12 weist das Stützrohr 66 bodenseitig die ringartige Verbreiterung 74 auf, die nunmehr sich in radialer Richtung unter Ersatz der unteren Endkappe 90 über die gesamte Unterseite des unteren Abdichtbereiches 54 erstreckt. Bei der dahingehenden Ausführungsform wird dann die plissierte Medienbahn 14 mit den Abdichtbereichen 52, 54 nach außen hin nur mittels des hohlzylindrischen Umfassungsmantels 64 gespannt. Insoweit erstreckt sich der folienartig, perforierte Umfassungsmantel 66 unter Freilassen des Außenumfangsrandes der unteren Verbreiterung 74 außenumfangsseitig unter Anlage mit der Medienbahn 14 über beide randseitigen Abdichtbereiche 52, 54 hinweg. Weiter ist anders als bei der Ausführungsform nach der Fig. 11 der Festlegering 78 nicht in der Höhe des oberen Dichtwulstes 70 angeordnet, sondern liegt vielmehr in der Horizontalebene des freien Endes des oberen Abdichtbereiches 52 mit dem oberen stirnseitigen Ende des Umfassungsmantels 64.

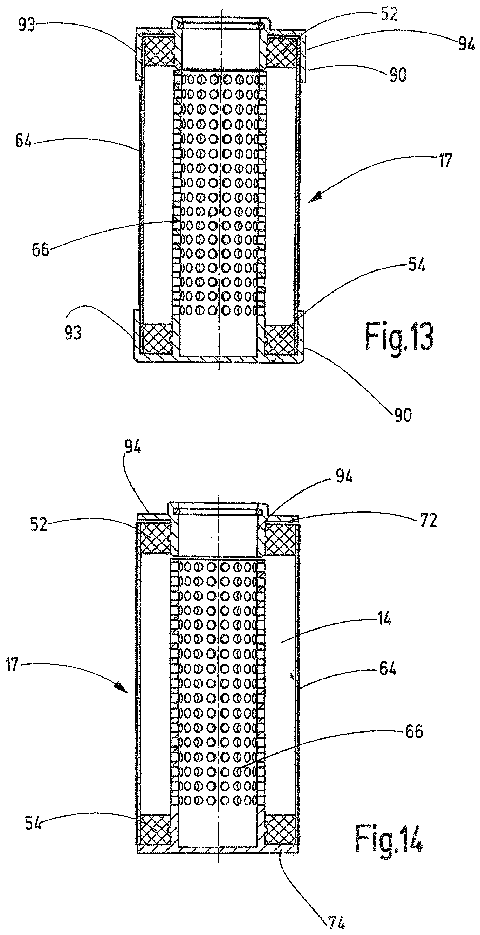

Bei den Ausführungsformen nach den Fig. 13 und 14 ist das Stützrohr 66 in seinem oberen Endbereich geteilt und weist nunmehr einen separaten Kappenabschnitt 94 auf. Die Medienbahn 14 mit ihrem jeweiligen Abdichtbereich 52, 54 wird dabei zwischen der oberen Endkappe 90 des Kappenabschnittes 94 und der unteren Endkappe 90 gespannt, wobei hier vorzugsweise wiederum eine Druckfeder 92 innerhalb einer Gehäusevorrichtung, vergleichbar der Lösung nach der Fig. 9, das Aufbringen der Anpresskraft für den Kappenverbund übernehmen kann. Ansonsten ist die obere Endkappe 90 wie auch die untere Endkappe 90 vergleichbar der Lösung nach der Fig. 11 ausgebildet.

Der obere Kappenabschnitt 94 weist insoweit die obere Endkappe 90 auf, die mit einem zylindrischen Umfassungsrand 93 den oberen Abdichtbereich 52 umfangsseitig umschließt. Ferner weist der Kappenabschnitt 94 den bereits vorgestellten Festlegestutzen 76 mit innenumfangsseitig angeordnetem Festlegering 78 auf. Des Weiteren verpresst der zugehörige Dichtwulst 70 als Teil des Kappenabschnittes 94 den oberen Abdichtbereich 52 gegenüber dem flankenartig nach unten vorspringenden Umfassungsrand 93, der insoweit gebildeten oberen Endkappe 90. Bei der Ausführungsform nach der Fig. 13 ist im Übrigen die untere Endkappe 90 vergleichbar zu der oberen Endkappe 90 ausgebildet und steht mit einem vorgebbaren axialen Überstand über die Endseite des Abdichtbereiches 54 vor. Der Umfassungsmantel 64 verläuft dabei in einem Medienbahnabschnitt zwischen den beiden gegenüberliegenden Endkappen 90.

Bei der Ausführungsform nach der Fig. 14 weist der obere Kappenabschnitt 94 die ringartige Verbreiterung 72 auf und ebenso ist das Stützrohr 66 an seinem unteren Ende mit der ringartigen Verbreiterung 74 versehen, vergleichbar der Lösung nach der Fig. 12.

Bei den Ausführungsformen nach den Fig. 11 bis 14 lässt sich insbesondere die Medienbahn 14 mit ihren beiden Abdichtbereichen 52, 54 auf das Stützrohr 66 durch Aufschieben montieren und anschließend kann eine obere Endkappe 90 oder der Kappenabschnitt 94 nachträglich gleichfalls durch Aufschieben angebracht werden.

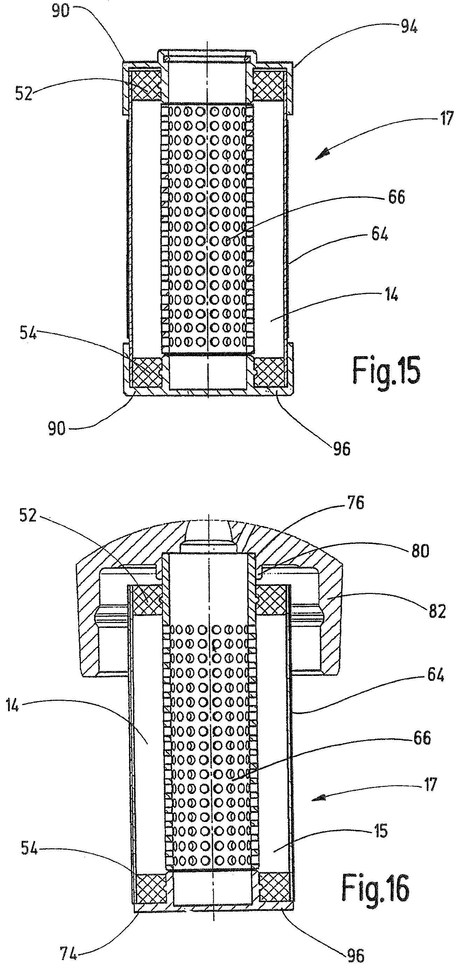

Bei der Ausführungsform nach der Fig. 15 ist vergleichbar der Ausbildung mit dem oberen Kappenabschnitt 94 nunmehr auch ein separater unterer Kappenabschnitt 96 vorgesehen. Dies erhöht die Modularität für den Aufbau eines Filterelementes 17, in dem weitgehend einzelne Abschnitte desselben frei zusammengesetzt werden können. Dergestalt lässt sich beispielsweise ein Stützrohr 66 unterschiedlicher axialer Baulänge mit Medienbahnen 14 vergleichbarer Längenausprägung zwanglos miteinander verbinden und die Kappenabschnitte 94, 96 lassen sich nachträglich zur Komplementierung des Gesamt-Filterelementes 17 einsetzen. Bei den Ausführungsformen nach den Fig. 11 bis 15 dient wiederum der Festlegestutzen 76 mit integriertem Festlegering 78 dazu, das jeweilige Filterelement 17, vergleichbar der Darstellung nach der Fig. 8, auf den Anschlussstutzen 80 des Filterkopfes 82 für einen Festlegevorgang in wiedertrennbarer Weise für einen Austauschvorgang gegen ein Neuelement 17 aufzuschieben.

Bei der teilweise dargestellten Gehäuse-Ausführungsform nach der Fig. 16 wird ein Filterelement 17 mit rohrförmigem Festlegestutzen 76 innenseitig in den Anschlussstutzen 80 des Filterkopfes 82 eingepresst, so dass das Stützrohr 66 stationär am Filterkopf 82 verbleibt. Ein unterer Kappenabschnitt 96, der getrennt vom sonstigen Stützrohr 66 ausgebildet ist, kann dann zusammen mit dem Umfassungsmantel 64, der plissierten Medienbahn 14 sowie den beiden Abdichtbereichen 52, 54 für einen Tauschvorgang vom verbleibenden Stützrohr 66 abgezogen werden. Hierfür umgreift der Umfassungsmantel 64 mit seiner axialen Baulänge sowohl außenumfangsseitig den oberen Abdichtbereich 52 als auch den unteren 54. Die Elastizität für die Abdichtbereiche 52, 54 ist derart gewählt, dass trotz der jeweiligen Dichtwulst 70 ein Abziehen des Filtermediums 15 als Ganzes möglich ist. Sofern das Filtermedium 15 wegen zunehmender Partikelverunreinigung verschmutzt ist, kann das insoweit verbrauchte Medium gegen ein neues Medium 15 getauscht werden und das Einschieben des Neuelementes geht so lange vonstatten, bis der obere Ringrand des unteren Ringkappenabschnittes 96 in Anlage kommt mit der unteren freien Stirnseite des Stützrohres 66.

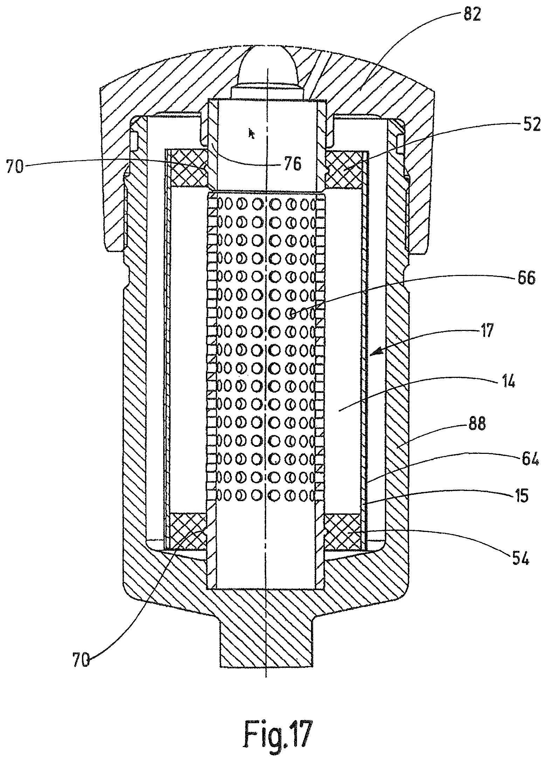

Bei der Ausführungsform nach der Fig. 17 ist in besonders einfacher Ausgestaltung eines Coreless-Adapters weder ein Kappenabschnitt 94 noch ein Kappenabschnitt 96 oder eine sonstige Endkappe 90 und auch keinerlei ringartige Verbreiterung 72, 74 vonnöten, sondern vielmehr genügt hier eine Lösung vergleichbar der Ausgestaltung nach der Fig. 10; jedoch mit der Maßgabe, dass hier wiederum der Umfassungsmantel 64 beide Abdichtbereiche 52, 54 mit umfasst. Insoweit stützt sich der Umfassungsmantel 64 mit dem unteren Abdichtbereich 54 auf der Innenseite des Filtertopfes 88 ab. Des Weiteren ist das Stützrohr 66 von dem oberen im Filterkopf 82 verbleibenden Festlegestutzen 76 durch Abziehen abnehmbar. Insoweit ist eine erhöhte Modularität im Sinne eines Baukastensystems für die Vergleichslösung nach der Fig. 17 geschaffen. Auch im dahingehenden Fall wird die Medienbahn 14 durch die Hülse in Form des Umfassungsmantels 64 gespannt. Ist das untere Ende des Stützrohres 66 in verstärktem Maße in den Boden des Gehäuse- oder Filtertopfes 88 eingepresst gegenüber der oberen Festlegestelle im Filterkopf 82 mittels des Festlegestutzens 76, lässt sich insoweit auch das gesamte Filterelement 17 vom Filterkopf 82 für einen Austauschvorgang gegen ein Neuelement 17 abziehen und derart entfernen. Weitere Ausgestaltungen eines diesbezüglichen Elementaufbaus sind möglich.

## Patentansprüche

1. Verfahren zur Bildung eines zur Filtration von Fluiden geeigneten Filtermediums (15) für ein Filterelement (17) mit zumindest den folgenden Verfahrensschritten:
- Aufbringen mindestens eines eigenständigen Dichtmittels (16, 28) in einer vorgebbaren Richtung (26) auf eine fluiddurchlässige Medienbahn (14),
- Herstellen eines festen Verbundes zumindest zwischen Teilen des Dichtmittels (16, 28) und der Medienbahn (14),
- Plissieren des Verbundes unter Bildung einzelner Filterfalten (46) quer zu der vorgebbaren Richtung (26),
- Erzeugen eines Hohlkörpers (48), indem die beiden einander benachbart gegenüberliegenden, quer zur vorgebbaren Richtung (26) verlaufenden Seitenränder (50) der Medienbahn (14) miteinander verbunden werden, so dass für das
- Erhalten mindestens eines Abdichtbereiches (52, 54) an der Medienbahn (14), das jeweilige Dichtmittel (16, 28) auf der Innenseite (60) des Hohlkörpers (48) angeordnet eine Abdichtung für die jeweilige Filterfalte (46) und eine stirnseitige Abdichtung der Medienbahn (14) erreicht wird,
**dadurch gekennzeichnet, dass** das Dichtmittel (16, 28) aus einem Materialstreifen zwecks Erhalt eines Dichtstreifens gebildet wird, das zumindest teilweise aus einem verschweißbaren Kunststoffmaterial besteht und das nach Aufbringen auf die Medienbahn (14) zum Herstellen des festen Verbundes mittels eines Schweißverfahrens aufgeschweißt wird.

2. Verfahren nach Anspruch 1, **dadurch gekennzeichnet, dass** der jeweilige Dichtstreifen in der vorgebbaren Richtung (26) als Transportrichtung (38) für das Plissieren des Verbundes von Medienbahn (14) und Dichtstreifen zugeführt und derart, vorzugsweise mittig, mit der Medienbahn (14) entlang einer Schweißbahn (30) verschweißt wird, dass zumindest in Richtung der Medienbahn (14) ein Längsstreifen (34) des Dichtmittels (16, 28) frei auf der Medienbahn (14) aufliegt, und anschließend derartigem Durchtrennen der Medienbahn (14) entlang der Schweißbahn (30) bei Erhalt eines Abfallstreifens (40) oder einer weiteren Medienbahn, dass die verbleibende Schweißbahn (42) die Medienbahn (14) abdichtet und dass der auf der Medienbahn (14) frei aufliegende Längsstreifen (34) nach dem Plissieren die Filterfalten (46) abdichtet.

3. Verfahren nach Anspruch 1 oder 2, **dadurch gekennzeichnet, dass** die plissierte Medienbahn (14) vor Erzeugung des Hohlkörpers (48) in Bahnabschnitte quer zur Zufuhrrichtung (44) in vorgebbare Längen abgeteilt wird und dass vorzugsweise der dahingehende Trennschnitt in einer Querschweißnaht (49) der Medienbahn (14) durchgeführt wird.

4. Verfahren nach einem der vorstehenden Ansprüche, **dadurch gekennzeichnet, dass** als Schweißverfahren, vorzugsweise auch zum Verbinden von einzelnen, übereinanderliegenden Lagen (10) der Medienbahn (14) ein Ultraschallschweißverfahren durchgeführt wird.

5. Verfahren nach einem der vorstehenden Ansprüche, **dadurch gekennzeichnet, dass** das jeweilige Dichtmittel (16, 28) entlang der beiden, einander gegenüberliegenden Stirnseiten (62) in den zugehörigen Endbereichen der hohlkörperartigen Medienbahn (14) angeordnet wird.

6. Verfahren nach einem der vorstehenden Ansprüche, **dadurch gekennzeichnet, dass** das Filtermedium (15) klebstoffrei hergestellt wird, und dass die Filterfalten (46) nach außen hin von einem folienartigen, fluiddurchlässigen Umfassungsmantel (64) umfasst werden.

7. Verfahren nach einem der vorstehenden Ansprüche, **dadurch gekennzeichnet, dass** für das streifenförmige, aufzuschweißende Dichtmittel (16, 28) thermoplastische Kunststoffe, vorzugsweise Filtermedien, eingesetzt werden, wie ein Non-Woven oder ein Spinnvlies.

8. Filterelement mit einem Filtermedium, hergestellt mit einem Verfahren nach einem der vorangehenden Ansprüche, mit einem fluiddurchlässigen Stützrohr (66), das von einer plissierten Medienbahn (14) eines Filtermediums (15) umfasst ist, **dadurch gekennzeichnet, dass** die Medienbahn (14) an mindestens einem ihrer Endbereiche (52, 54) ein streifenförmiges Dichtmittel (16, 28) aufweist, das in die Medienbahn (14) mit eingefaltet ist und das als eigenständiges Bauteil (16, 28) zumindest teilweise mit der Medienbahn (14) fest verbunden ist.

9. Filterelement nach Anspruch 8, **dadurch gekennzeichnet, dass** das streifenförmige Dichtmittel (16, 28) aus einem thermoplastischen Filtermedium, wie einem Non-Woven oder einem Spinnvlies besteht.

10. Filterelement nach Anspruch 8 oder 9, **dadurch gekennzeichnet, dass** das jeweilige streifenförmige Dichtmittel (16, 28) in Richtung des stirnseitigen Endes (62) der Medienbahn (14) unter Abdichtung derselben mit dieser fest verbunden ist, vorzugsweise fest verschweißt ist, und dass Teile (34) des Dichtmittels (16, 28) frei auf der Medienbahn (14) aufliegend zwischen den Abstand einer jeweils zuordenbaren Filterfalte (46) unter Abdichtung dieses Abstandes eingreift und entlang jeweils eines Faltentales (56) zwischen zwei benachbarten Filterfalten (46) unter Anlage mit dem zuordenbaren Faltental (56) geführt ist.

11. Filterelement nach einem der Ansprüche 8 bis 10, **dadurch gekennzeichnet, dass** das Stützrohr (66) mindestens eine nach außen vorspringende Dichtwulst (70) aufweist, die in das benachbart angeordnete Dichtmittel (16, 28) unter Verpressung dieses Dichtmittels (16, 28) eingreift.

12. Filterelement nach einem der Ansprüche 8 bis 11, **dadurch gekennzeichnet, dass** das Stützrohr (66) im Bereich der Anlage mit dem jeweiligen Dichtmittel (16, 28) fluidundurchlässig ausgebildet ist.

13. Filterelement nach einem der Ansprüche 8 bis 12, **dadurch gekennzeichnet, dass** die Medienbahn (14) von einem folienartigen fluiddurchlässigen Umfassungsmantel (64) umfasst ist, der sich zumindest zwischen zwei gegenüberliegenden Dichtmitteln 16, 28) erstreckt.

14. Filterelement nach einem der Ansprüche 8 bis 13, **dadurch gekennzeichnet, dass** das Stützrohr (66) zumindest an einem seiner Enden eine ringartige Verbreiterung (72, 74) aufweist, die zumindest teilweise das jeweils benachbart angeordnete Dichtmittel (16, 28) übergreift.

15. Filterelement nach einem der Ansprüche 8 bis 14, **dadurch gekennzeichnet, dass** das Stützrohr (66) an einem seiner freien Enden an einem Festlegestutzen (76) innenseitig einen Festlegering (78), vorzugsweise in der Art eines O-Dichtringes aufweist oder in diesem Bereich als Einpressteil konzipiert ist.

16. Filterelement nach einem der Ansprüche 8 bis 15, **dadurch gekennzeichnet, dass** die Medienbahn (14) sich zumindest an einer Endkappe (90) abstützt, die eigenständig oder einstückiger Bestandteil des Stützrohres (66) ist.

17. Filtervorrichtung, in die ein Filterelement nach einem der Ansprüche 8 bis 16 aufgenommen ist, mit einem Filterkopf (82), der einen Zulauf (84) für Unfiltrat und einen Ablauf (86) für Filtrat aufweist und einem daran lösbar angeordneten Filtertopf (88), der das Filterelement (17) aufnimmt, **dadurch gekennzeichnet, dass** das Filterelement (17) mittels eines Festlegestutzens (76) seines Stützrohres (66) lösbar oder fest mit dem Ablauf (86) im Filterkopf (82) verbunden ist.

## Claims

1. Method for forming a filter medium (15), which is suitable for filtering fluids, for a filter element (17), said method having at least the following method steps:
- applying at least one discrete sealing agent (16, 28) onto a fluid-permeable media web (14) in a predefinable direction (26),
- producing a solid composite at least between parts of the sealing agent (16, 28) and the media web (14),
- pleating the composite to form individual filter pleats (46) transverse to the predefinable direction (26),
- producing a hollow body (48) in that the two lateral edges (50) of the media web (14), adjoining each other, opposing each other and extending transverse to the predefinable direction (26), are joined together such that in order to
- obtain at least one sealing region (52, 54) on the media web (14), the respective sealing agent (16, 28) is arranged on the inside (60) of the hollow body (48), a seal is produced for the respective filter pleat (46), and an end-face seal of the media web (14) is achieved,
**characterised in that**
the sealing agent (16, 28) is formed from a strip of material for the purpose of obtaining a sealing strip which consists at least in part of a weldable plastics material and which, after being applied to the media web (14), is welded on by means of a welding process to produce the permanent composite.

2. Method according to claim 1, **characterised in that** the respective sealing strip is fed in the predefinable direction (26) as the transport direction (38) for pleating the composite of media web (14) and sealing strip and is welded, preferably centrally, to the media web (14) along a weld line (30) in such a manner that, at least in the direction of the media web (14), a longitudinal strip (34) of the sealing agent (16, 28) rests freely on the media web (14), and after cutting the media web (14) along the weld line (30) in such a manner as to obtain a waste strip (40) or a further media web, that the remaining weld line (42) seals the media web (14) and **in that** the longitudinal strip (34) lying freely on the media web (14) seals the filter pleats (46) after pleating.

3. Method according to either claim 1 or claim 2, **characterised in that** the pleated media web (14) is divided into web portions transverse to the feed direction (44) in predefinable lengths before the hollow body (48) is produced and **in that**, preferably, the separating cut to this effect is made in a transverse weld seam (49) of the media web (14).

4. Method according to any of the preceding claims, **characterised in that** an ultrasonic welding process is performed as the welding process, preferably also for joining individual layers (10) of the media web (14) lying one above the other.

5. Method according to any of the preceding claims, **characterised in that** the respective sealing agent (16, 28) is arranged along the two end faces (62), which are opposite one another, in the associated end regions of the hollow body-like media web (14).

6. Method according to any of the preceding claims, **characterised in that** the filter medium (15) is produced without adhesive and **in that** the filter pleats (46) are outwardly enclosed by a film-like, fluid-permeable surrounding casing (64).

7. Method according to any of the preceding claims, **characterised in that** thermoplastic synthetics, preferably filter media, such as a nonwoven or spunbonded nonwoven, are used for the strip-shaped sealing agent (16, 28) to be welded on.

8. Filter element having a filter medium, produced using a method according to any of the preceding claims, with a fluid-permeable supporting tube (66), which is surrounded by a pleated media web (14) of a filter medium (15), **characterised in that** the media web (14) has, on at least one of its end regions (52, 54), a strip-shaped sealing agent (16, 28) which is also folded into the media web (14) and which, as a discrete component (16, 28), is at least in part permanently connected to the media web (14).

9. Filter element according to claim 8, **characterised in that** the strip-shaped sealing agent (16, 28) consists of a thermoplastic filter medium, such as a nonwoven or spunbonded nonwoven.

10. Filter element according to either claim 8 or claim 9, **characterised in that** the respective strip-shaped sealing agent (16, 28) is permanently connected, preferably permanently welded, to the media web (14) towards the front-face end (62) thereof, while sealing said web, and **in that** parts (34) of the sealing agent (16, 28), resting freely on the media web (14), engage between the gap of a respectively assignable filter pleat (46) while sealing this gap and are guided along a respective pleat trough (56) between two adjacent filter pleats (46) while bearing against the assignable pleat trough (56).

11. Filter element according to any of claims 8 to 10, **characterised in that** the supporting tube (66) has at least one outwardly protruding sealing bead (70) which engages in the adjacently arranged sealing agent (16, 28) while compacting said sealing agent (16, 28).

12. Filter element according to any of claims 8 to 11, **characterised in that** the supporting tube (66) is configured to be fluid-impermeable in the region of contact with the respective sealing agent (16, 28).

13. Filter element according to any of claims 8 to 12, **characterised in that** the media web (14) is enclosed by a film-like fluid-permeable surrounding casing (64) which extends at least between two opposite sealing agents (16, 28).

14. Filter element according to any of claims 8 to 13, **characterised in that** the supporting tube (66) has a ring-like broadening (72, 74) at least on one of its ends which at least partially overlaps the adjacently arranged sealing agent (16, 28) in each case.

15. Filter element according to any of claims 8 to 14, **characterised in that** the supporting tube (66) has, on one of its free ends on a locator fitting (76), a locator ring (78) on the inside thereof, preferably in the manner of an O-ring or is designed in this region as a press-fit part.

16. Filter element according to any of claims 8 to 15, **characterised in that** the media web (14) is supported at least on one end cap (90) which is an independent or integral part of the supporting tube (66).

17. Filter device in which a filter element according to any of claims 8 to 16 is received, comprising a filter head (82) that has an inlet (84) for unfiltered medium and an outlet (86) for filtrate, and a filter bowl (88) releasably arranged thereon which receives the filter element (17), **characterised in that** the filter element (17) is connected releasably or permanently to the outlet (86) in the filter head (82) by means of a locator fitting (76) of its supporting tube (66).

## Revendications

1. Procédé de formation d'un milieu (15) filtrant, propre à la filtration de fluides, pour un élément (17) de filtre comprenant au moins les stades de procédé suivants :
- dépôt d'au moins un moyen (16, 28) d'étanchéité indépendant dans une direction (26) pouvant être donnée à l'avance sur une feuille (14) de milieu perméable aux fluides,
- production d'un composite solide au moins entre des parties du moyen (16, 28) d'étanchéité et de la feuille (14) de milieu,
- plissement du composite avec formation de plis (46) individuels de filtre transversalement à la direction (26) pouvant être donnée à l'avance,
- production d'un corps (48) creux,
en reliant l'un à l'autre les deux bords (50) latéraux, opposés en étant voisins l'un de l'autre et s'étendant transversalement à la direction (26) pouvant être donnée à l'avance, de la feuille (14) de milieu, de sorte que pour
- l'obtention d'au moins une partie (52, 54) d'étanchéité sur la feuille (14) de milieu, on met le moyen (16, 28) d'étanchéité respectif sur la face (60) intérieure du corps (48) creux et on obtient une étanchéité pour les plis (46) respectifs du filtre el une étanchéité du côté frontal de la feuille (14) de milieu,
**caractérisé**
**en ce que** le moyen (16, 28) d'étanchéité est formé de bandes de matière en vue d'obtenir une bande d'étanchéité constituée au moins en partie d'une matière plastique pouvant être soudée et qui, après le dépôt sur la feuille (14) de milieu est, pour l'obtention du composite solide, soudée au moyen d'un procédé de soudage.

2. Procédé suivant la revendication 1, **caractérisé en ce que** la bande d'étanchéité respective est apportée dans la direction (26) pouvant être donnée à l'avance comme direction (38) de transport, pour le plissement du composite de feuille (14) de milieu et de la bande d'étanchéité, et soudée, de préférence au milieu, à la feuille (14) de milieu le long de la bande (30) de soudage, de manière à ce qu'au moins dans la direction de la feuille (14) de milieu, une bande (34) longitudinale du moyen (16, 28) d'étanchéité s'applique librement sur la feuille (14) de milieu, et ensuite, par séparation de la feuille (14) de milieu le long de la bande (30) de soudage avec obtention d'une bande (40) de déchet ou d'une autre feuille de milieu, de manière à ce que la bande (42) de soudage restante rende étanche la feuille (14) de milieu et de manière à ce que la bande (34) longitudinale, s'appliquant sur la feuille (14) de milieu, rende étanches les plis (46) de filtre après le plissement.

3. Procédé suivant la revendication 1 ou 2, **caractérisé en ce que** la feuille (14) de milieu plissée est, avant la production du corps (48) creux, subdivisée en parties de feuille en des longueurs pouvant être données à l'avance transversalement à la direction (44) d'apport et **en ce que**, de préférence la section de coupe est effectuée dans un cordon (49) de soudure transversale de la fouille (14) de milieu.

4. Procédé suivant l'une des revendications précédentes, **caractérisé en ce que**, comme procédé de soudage, on effectue, de préférence également, pour la liaison de diverses couches (10) superposées de la feuille (14) de milieu, un procédé de soudage par ultrasons.

5. Procédé suivant l'une des revendications précédentes, **caractérisé en ce que** le moyen (16, 28) d'étanchéité respectif est disposé le long des deux côtés (62) frontaux opposés l'un à l'autre dans les parties d'extrémité associées de la feuille (14) de milieu de type à corps creux.

6. Procédé suivant l'une des revendications précédentes, **caractérisé en ce que** le milieu (15) filtrant est fabriqué sans col, et **en ce que** les plis (46) de filtre sont entourés vers l'extérieur d'une enveloppe (64) d'entourage de type à feuille perméable aux fluides.

7. Procédé suivant l'une des revendications précédentes, **caractérisé en ce que**, pour le moyen (16, 28) d'étanchéité, en forme de bande, à souder, on utilise des matières plastiques thermoplastiques, de préférence des milieux filtrants, comme un non-tissé ou un non-tissé en filature directe.

8. Elément de filtre comprenant un milieu filtrant produit par un procédé suivant l'une des revendications précédentes, comprenant un tube (66) support perméable aux fluides, qui est entouré d'une feuille (14) plissée d'un milieu (15) filtrant, **caractérisé en ce que** la feuille (14) de milieu a, sur au moins l'une de ses parties (52, 54) d'extrémité, un moyen (16, 28) d'étanchéité en forme de bande, qui est incorporé dans les plis de la feuille (14) de milieu, et qui, en tant que constituant (16, 28) indépendant, est relié fixement au moins en partie à la feuille (14) de milieu.

9. Elément de filtre suivant la revendication 8, **caractérisé en ce que** le moyen (16, 28) d'étanchéité en forme de bande est en un milieu filtrant thermoplastique, comme un non-tissé ou un non-tissé à filature directe.

10. Elément de filtre suivant la revendication 8 ou 9, **caractérisé en ce que** le moyen (16, 28) d'étanchéité respectif en forme de bande est, dans la direction de l'extrémité (62) du côté frontal de la feuille (14) de milieu, relié à celle-ci de manière fixe avec étanchéité de celle-ci, en étant de préférence soudé solidement, et **en ce que** des parties (34) du moyen (16, 28) d'étanchéité, s'appliquant librement sur la feuille (14) de milieu, pénètrent entre la distance d'un pli (46) de filtre pouvant être associé respectivement avec étanchéité de cette distance et est guidé le long respectivement d'un creux (56) de pli entre deux plis (46) de filtre voisins en s'appliquant au creux (56) de pli pouvant être associé.

11. Elément de filtre suivant l'une des revendications 8 à 10, **caractérisé en ce que** le tube (66) d'appui a au moins un bourrelet (70) d'étanchéité en saillie vers l'extérieur, qui pénètre dans le moyen (16, 28) d'étanchéité disposé au voisinage, en pressant ce moyen (16, 28) d'étanchéité.

12. Elément de filtre suivant l'une des revendications 8 à 11, **caractérisé en ce que** le tube (66) d'appui est constitué de manière perméable aux fluides dans la partie du contact avec le moyen (16, 28) respectif d'étanchéité.

13. Elément de filtre suivant l'une des revendications 8 à 12, **caractérisé en ce que** la feuille (14) de milieu est entourée d'une enveloppe (64) de type à feuille perméable aux fluides, qui s'étend au moins entre deux moyens (16, 28) d'étanchéité opposés.

14. Elément de filtre suivant l'une des revendications 8 à 13, **caractérisé en ce que** le tube (66) d'appui a, au moins à l'une des ses extrémités, un élargissement (72, 74) annulaire, qui recouvre au moins en partie le moyen (16, 28) d'étanchéité respectif disposé au voisinage.

15. Elément de filtre suivant l'une des revendications 8 à 14, **caractérisé en ce que** le tube (66) d'appui a, à l'une des ses extrémités libres, sur une tubulure (76) de fixation, du côté intérieur, une bague (78) de fixation, de préférence à la manière d'un joint torique, ou est conçu, dans cette partie, sous la forme d'une pièce à presser.

16. Elément de filtre suivant l'une des revendications 8 à 15, **caractérisé en ce que** la feuille (14) de milieu s'appuie au moins sur une coiffe (90) d'extrémité, qui est autonome ou une partie constitutive d'une seule pièce du tube (66) d'appui.

17. Dispositif de filtration, dans lequel un élément de filtre suivant l'une des revendications 8 à 16 est reçu, comprenant une tête (82) de filtre, qui a une arrivée (84) pour du non filtrat et une évacuation (86) pour du filtrat et un pot (88) de filtre, qui est y monté de manière amovible et qui reçoit l'élément (17) de filtre, **caractérisé en ce que** l'élément (17) de filtre est relié, de manière amovible au moyen d'un support (76) de fixation de son tube (66) d'appui ou fixement, à l'évacuation (86) dans la tête (82) de filtre.
